# EUROPEAN PATENT APPLICATION

(11) **EP 3 512 080 A1**
(43) Date of publication of application: **17.07.2019**
(21) Application number: 17888479.7
(22) Date of filing: 21.12.2017
(51) Int. Cl.: H02K 21/22

(54) **DYNAMO-ELECTRIC MACHINE**

(30) Priority: 27.12.2016 JP 2016252490
(71) Applicant: AISIN AW CO., LTD., Anjo-shi, Aichi-ken, 444-1192 (JP)
(72) Inventor: MIYAJI, Tsuyoshi, Anjo-shi Aichi 444-1192 (JP); SAITO, Naoto, Anjo-shi Aichi 444-1192 (JP)
(74) Representative: Kramer Barske Schmidtchen Patentanwälte PartG mbB
(86) International application number: PCT/JP2017/046030
(87) International publication number: WO 2018/123830

(57) **Abstract**

A rotating electric machine includes a rotor and a stator. The rotor includes a plurality of rotor portions provided by circumferentially dividing the rotor. The rotor portions are each movable radially outward. The rotating electric machine is structured such that the rotor portions each move radially outward so as to increase a radial gap between the rotor and the stator.

## Description

### TECHNICAL FIELD

The present invention relates to rotating electric machines.

### BACKGROUND ART

A rotating electric machine known in the related art includes a stator and a rotor. Such a rotating electric machine is disclosed in, for example, Published Japanese Translation of PCT Application No. 2009-544270 (JP 2009-544270 A).

A transmission apparatus disclosed in Published Japanese Translation of PCT Application No. 2009-544270 (JP 2009-544270 A) is a rotating electric machine including a stator and a rotor. The stator includes an inner peripheral surface having a truncated conical shape (i.e., a tapered shape inclined relative to a rotation axis). The rotor is disposed radially inward of the stator. The rotor includes an outer peripheral surface having a truncated conical shape (i.e., a tapered shape inclined relative to the rotation axis) conforming to the stator. The transmission apparatus is structured to move the stator along the rotation axis. The transmission apparatus is structured to move the stator relative to the rotor along the rotation axis so as to change the size of a gap between the truncated conical inner peripheral surface of the stator and the truncated conical outer peripheral surface of the rotor in a direction perpendicular to the inner peripheral surface of the stator (i.e., the inclined surface of the truncated conical stator).

### Related Art Documents

### Patent Documents

Patent Document 1: Published Japanese Translation of PCT Application No. 2009-544270 (JP 2009-544270 A)

### SUMMARY OF THE PRESENT INVENTION

### Problem to be Solved by the Invention

The transmission apparatus disclosed in Published Japanese Translation of PCT Application No. 2009-544270 (JP 2009-544270 A), however, is structured to move the stator relative to the rotor along the rotation axis so as to change or increase the size of the gap between the truncated conical inner peripheral surface of the stator and the truncated conical outer peripheral surface of the rotor in the direction perpendicular to the inner peripheral surface of the stator (i.e., the inclined surface of the truncated conical stator). The dimension by which the gap is changed in size in this case is smaller than the distance by which the stator is moved along the rotation axis. The transmission apparatus disclosed in Published Japanese Translation of PCT Application No. 2009-544270 (JP 2009-544270 A) is thus required to move the stator by a relatively long distance in order to increase the gap to a desired size. This increases the size of the transmission apparatus accordingly. In other words, the transmission apparatus (i.e., the rotating electric machine) disclosed in Published Japanese Translation of PCT Application No. 2009-544270 (JP 2009-544270 A) unfortunately increases in size in order to increase the size of the gap between the stator and the rotor.

The present invention has been made to solve the above problems, and an object of the present invention is to provide a rotating electric machine that is able to increase a gap between a stator and a rotor while preventing an increase in size of the rotating electric machine.

### Means for Solving the Problem

To achieve the above object, a rotating electric machine according to an aspect of the present invention includes a stator and an annular rotor. The stator includes a winding. The rotor is disposed radially outward of the stator, with a radial gap between the rotor and the stator. The rotor includes a plurality of portions provided by circumferentially dividing the rotor. The portions provided by circumferentially dividing the rotor are each movable radially outward. The rotating electric machine is structured such that the portions provided by circumferentially dividing the rotor each move radially outward so as to increase the radial gap between the rotor and the stator.

As described above, the rotating electric machine according to the aspect of the present invention is structured such that the portions provided by circumferentially dividing the rotor each move radially outward so as to increase the size of the radial gap between the rotor and the stator. This makes it possible to increase the size of the radial gap between the rotor and the stator by a distance by which the rotor is moved radially outward. The rotating electric machine is thus able to relatively reduce the distance by which the rotor is moved in order to provide the gap having a desired size. This makes it possible to increase the size of the gap between the stator and the rotor while preventing an increase in the size of the rotating electric machine. Axially moving a stator and a rotor relative to each other causes the relative positions of the stator and the rotor to deviate axially, resulting in a reduction in the area of a region where the stator and the rotor radially face each other. When a rotating electric machine that axially moves a stator and a rotor relative to each other is a motor, a reduction in the area of a region where the stator and the rotor radially face each other unfortunately results in a reduction in motor torque. To solve this problem, the present invention involves moving each of the portions radially outward as described above. Accordingly, the relative positions of the stator and the rotor will not deviate axially, and the area of a region where the stator and the rotor radially face each other will not decrease. Consequently, the present invention makes it possible to prevent a reduction in motor torque.

### Effects of the Invention

As described above, a rotating electric machine according to the present invention is able to increase a gap between a stator and a rotor while preventing an increase in size of the rotating electric machine.

### BRIEF DESCRIPTION OF THE DRAWINGS

FIG. 1 is a cross-sectional view of a rotating electric machine according to an embodiment of the present invention, illustrating its overall structure.
FIG. 2 is a partial cross-sectional view of the rotating electric machine according to the embodiment of the present invention.
FIG. 3 is a cross-sectional view of the rotating electric machine according to the embodiment of the present invention, illustrating how its rotor portions move.
FIG. 4 is a diagram illustrating the structure of a mover of the rotating electric machine according to the embodiment of the present invention.
FIG. 5 is a cross-sectional view of the rotating electric machine according to the embodiment of the present invention, illustrating an urging force applied to the rotor portions.
FIG. 6 is a cross-sectional view of the rotating electric machine according to the embodiment of the present invention, illustrating a centrifugal force applied to the rotor portions.
FIG. 7 provides a graph illustrating the relationship between the rotational frequency of the rotating electric machine according to the embodiment of the present invention and a radial gap, and a graph illustrating the relationship between the rotational frequency of the rotating electric machine according to the embodiment of the present invention and a circumferential gap.
FIG. 8 provides a graph illustrating the relationship between the rotational frequency of a rotating electric machine according to a first variation of the embodiment of the present invention and a radial gap, and a graph illustrating the relationship between the rotational frequency of the rotating electric machine according to the first variation of the embodiment of the present invention and a circumferential gap.
FIG. 9 provides a graph illustrating the relationship between the rotational frequency of a rotating electric machine according to a second variation of the embodiment of the present invention and a radial gap, and a graph illustrating the relationship between the rotational frequency of the rotating electric machine according to the second variation of the embodiment of the present invention and a circumferential gap.
FIG. 10 provides a graph illustrating the relationship between the rotational frequency of a rotating electric machine according to a third variation of the embodiment of the present invention and a radial gap, and a graph illustrating the relationship between the rotational frequency of the rotating electric machine according to the third variation of the embodiment of the present invention and a circumferential gap.
FIG. 11 is a diagram illustrating the structure of a rotating electric machine according to a fourth variation of the embodiment of the present invention.
FIG. 12 provides a diagram illustrating the structure of a rotor portion according to a fifth variation of the embodiment of the present invention, and a diagram illustrating the structure of a rotor portion according to a sixth variation of the embodiment of the present invention.

### MODES FOR CARRYING OUT THE INVENTION

An embodiment of the present invention will be described below with reference to the drawings.

### Overall Structure of Rotating Electric Machine

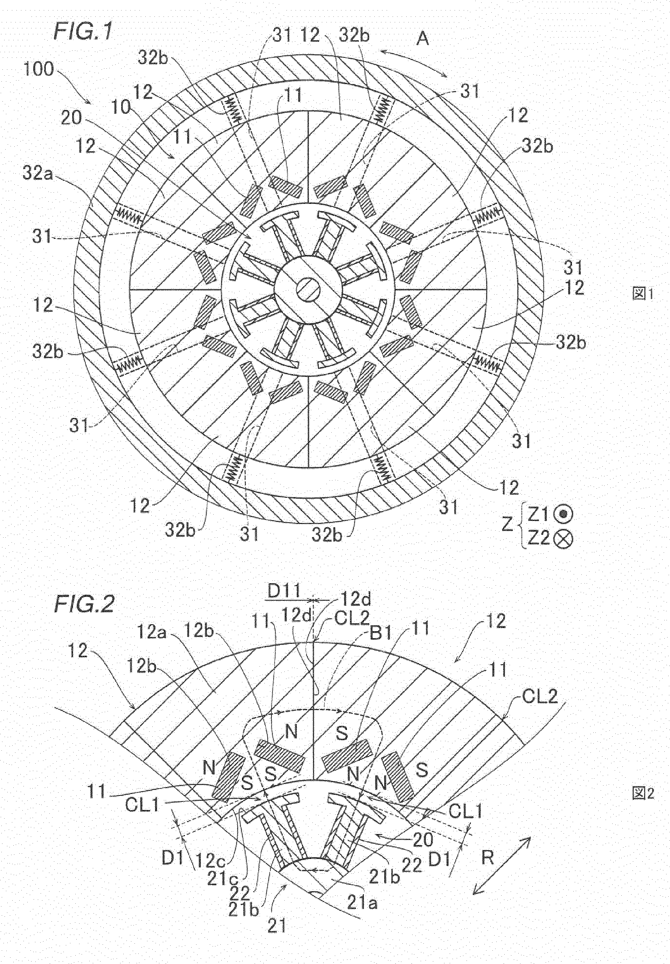

The structure of a rotating electric machine 100 according to the embodiment of the present invention will be described with reference to FIGS. 1 to 7.

As illustrated in FIG. 1, the rotating electric machine 100 includes a rotor 10 and a stator 20. The rotor 10 is formed to have an annular shape. The rotor 10 is disposed radially outward of the stator 20, with gaps CL1 created between the rotor 10 and the stator 20. Specifically, the rotor 10 is disposed to surround the radially outer portion of the stator 20. This means that the rotor 10 is an outer rotor, and the rotating electric machine 100 is a radial magnetic flux type rotating electric machine. The rotor 10 includes a plurality of permanent magnets 11 disposed therein. In one example, the number of permanent magnets 11 is 16. In other words, the rotor 10 is a permanent magnet type rotor. The rotor 10 and the stator 20 are disposed to radially face each other. The stator 20 has an annular shape such that the stator 20 includes outer peripheral surfaces each in the form of a segment of a circle.

In one example, the rotating electric machine 100 is a motor or a generator. When the rotating electric machine 100 is a motor, the rotating electric machine 100 is structured to supply power to the stator 20 so as to rotate the rotor 10 and transmit a rotational motion to a load (not illustrated) through a shaft and/or a gear, for example. When the rotating electric machine 100 is a generator, the rotating electric machine 100 is structured such that the rotor 10 receives a rotational motion through a shaft and/or a gear, for example, and thus causes the stator 20 to generate power and supply the power to a device, such as a battery, so as to effect regeneration. The following description is based on the assumption that the rotating electric machine 100 is a motor.

As used herein, the term "circumferential" or "circumferentially" refers to the circumferential direction of the rotating electric machine 100 indicated by the arrows A. As used herein, the term "radial" or "radially" refers to the radial direction of the rotating electric machine 100 (the rotor 10) indicated by the arrows R (see FIG. 2). As used herein, the term "axial" or "axially" refers to a direction parallel to the rotation axis of the rotating electric machine 100 (which is a motor or a generator) indicated by the arrow Z1 or Z2.

### Structure of Rotor

The rotor 10 is rotatable around its rotation axis. The rotor 10 has an annular shape. In the present embodiment, the rotor 10 includes a plurality of rotor portions 12 provided by circumferentially dividing the rotor 10. The number of rotor portions 12 of the rotor 10 is at least four. In one example, the number of rotor portions 12 of the rotor 10 is eight as illustrated in FIG. 1. The rotor portions 12 are circumferentially arranged at equiangular intervals. When the number of rotor portions 12 is eight, the rotor portions 12 are arranged at intervals of 45 degrees. The rotor portions 12 are identical in shape.

The following description will discuss the rotor portions 12 in detail. As illustrated in FIG. 2, each rotor portion 12 is made of a magnetic material. Specifically, each rotor portion 12 includes a rotor core 12a. The rotor portions 12 are provided with magnet holes 12b into which the permanent magnets 11 are inserted and in which the permanent magnets 11 are placeable. In one example, the number of magnet holes 12b of each rotor portion 12 is two. The permanent magnets 11 are placed in the two magnet holes 12b of each rotor portion 12.

In the present embodiment, the rotor 10 is divided into the rotor portions 12 each provided for every magnetic pole produced by the permanent magnets 11. In one example, when the rotating electric machine 100 is provided with eight magnetic poles, the rotor 10 is divided into the eight rotor portions 12. To be more specific, the permanent magnets 11 are placed in the magnet holes 12b such that the radially inner portions of the two permanent magnets 11 in each rotor portion 12 provide the same pole (i.e., the north or south pole), and the radially outer portions of the two permanent magnets 11 in each rotor portion 12 provide the same pole (i.e., the north or south pole). The two permanent magnets 11 in each rotor portion 12 thus provide a single magnetic pole. In one example, the two permanent magnets 11 in each rotor portion 12 extend radially inward such that the permanent magnets 11 spread in a V shape as viewed axially. The two permanent magnets 11 in each rotor portion 12 are placed such that the direction of magnetization intersects the radial direction as viewed axially.

Each rotor portion 12 includes radial dividing surfaces 12d. The dividing surfaces 12d are circumferential end faces of each rotor portion 12. The dividing surfaces 12d are surfaces extending axially and radially. The dividing surfaces 12d of one of the rotor portions 12 are disposed to circumferentially face the dividing surfaces 12d of other ones of the rotor portions 12 adjacent thereto.

The radial gaps CL1 are each created between a radially inner surface 12c of each of the rotor portions 12 and an associated one of radially outer surfaces 21c of the stator 20. With the rotor 10 in a non-rotating state, each radial gap CL1 has a size (i.e., a width or length) D1. Circumferential gaps CL2 are each created between the rotor portions 12 (i.e., between the dividing surfaces 12d). With the rotor 10 in the non-rotating state, each circumferential gap CL2 has a size (i.e., a width or length) D11. The size D11 is substantially zero. As used herein, the term "gap" not only refers to an interval between components disposed away from each other but also refers to an interval between components disposed in contact with each other in a broad sense. In other words, the dividing surfaces 12d may be disposed in contact with each other or may be disposed away from each other.

### Structure of Stator

As illustrated in FIG. 2, the stator 20 includes a stator core 21 and windings 22 disposed on the stator core 21. Specifically, the stator core 21 is made of a magnetic material. The stator core 21 includes a yoke 21a and teeth 21b extending radially outward from the yoke 21a in a radiated manner. In one example, the number of teeth 21b is eight.

The windings 22 are each made of a conductor. The windings 22 are each wound around an associated one of the teeth 21b by concentrated winding or distributed winding. The stator 20 is structured such that supply of power to the windings 22 from outside and flow of a current therethrough produces a magnetic flux. The radially outer surfaces 21c of the teeth 21b are disposed to radially face the rotor 10.

FIG. 2 schematically illustrates a path for a magnetic flux B1 (indicated by the dotted line with arrows), defined by the permanent magnets 11 (field magnets) of the rotor 10 and the stator 20. The magnetic flux B1 radially passes through the radial gaps CL1 between the rotor 10 and the stator 20 and passes across the circumferential gap CL2 between the rotor portions 12 circumferentially adjacent to each other.

The magnetic flux (magnetic field) produced by the stator 20 and the magnetic flux (magnetic field) produced by the magnetic poles of the rotor 10 interact with each other so as to cause the rotor 10 to rotate around its rotation axis. The rotor 10 is connected to a load (not illustrated) through, for example, a shaft and/or a gear (not illustrated). When the rotating electric machine 100 is a motor, the rotating electric machine 100 is structured to transmit a rotational motion of the rotor 10 to the load.

### Structure to Radially Move Rotor

Suppose that the radial gaps CL1 and the circumferential gaps CL2 remain constant in size. In this case, in the rotating electric machine 100, if a rotational frequency ω of the rotor 10 has exceeded a predetermined rotational frequency ω0, a counter electromotive voltage generated in the stator 20 by the permanent magnets 11 (field magnets) disposed in the rotor 10 will be higher than when the rotational frequency ω is equal to or lower than the predetermined rotational frequency ω0. A state where the rotational frequency ω is higher than the predetermined rotational frequency ω0 will hereinafter be referred to as a "high rotation state". A state where the rotational frequency ω is equal to or lower than the predetermined rotational frequency ω0 will hereinafter be referred to as a "low rotation state". When the radial gaps CL1 and the circumferential gaps CL2 remain constant in size and the rotational frequency ω has exceeded the predetermined rotational frequency ω0, the efficiency of the rotating electric machine 100 (e.g., the magnitude of torque relative to power) decreases. The predetermined rotational frequency ω0 is a value equal to or greater than zero. The following description is based on the assumption that the predetermined rotational frequency ω0 is a value greater than zero.

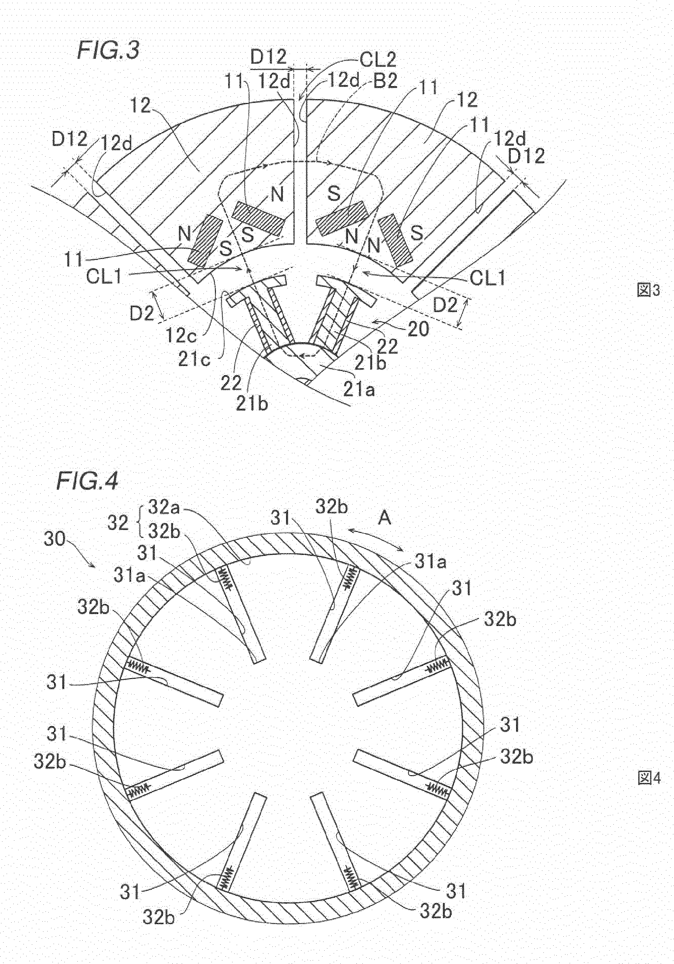

To solve the above problem, each of the rotor portions 12 according to the present embodiment is movable radially. As illustrated in FIG. 3, the rotating electric machine 100 is structured such that radially outward movement of each of the rotor portions 12 increases the size of each radial gap CL1 between the rotor 10 and the stator 20 from the size D1 to a size D2.

Specifically, as illustrated in FIG. 4, the rotating electric machine 100 includes a mover 30 that radially moves the rotor portions 12 of the rotor 10. The mover 30 is structured to rotate circumferentially around its rotation axis together with the rotor 10.

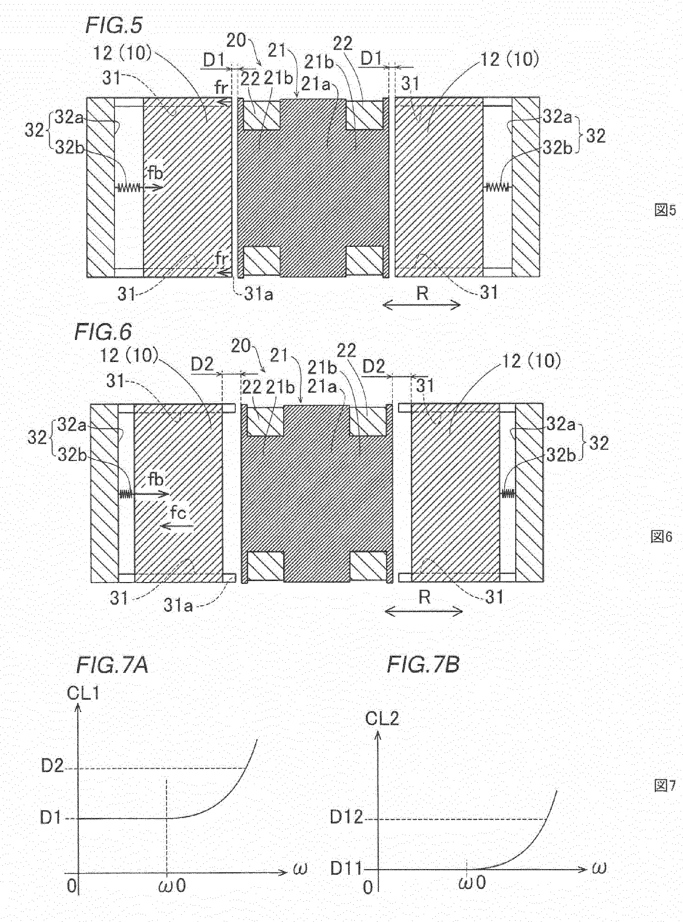

The following description will discuss the mover 30 in detail. In the present embodiment, the mover 30 includes guides 31 that guide the rotor portions 12 during radial sliding movement of each of the rotor portions 12. In one example, the guides 31 are radially extending slide rails to which the rotor portions 12 are partially fitted. Circumferential movement of the rotor portions 12 is restricted by the guides 31. The rotor portions 12 are movable radially along the guides 31. As illustrated in FIG. 5, the guides 31 are disposed on the axially opposite sides of the rotor portions 12 and in contact with the rotor portions 12.

The guides 31 include inner restrictors 31a that restrict radially inward movement of the rotor portions 12 such that each radial gap CL1 between the rotor 10 and the stator 20 will not be smaller than the size D1. The inner restrictors 31a limit the radially movable range of the rotor portions 12 in conjunction with an outer peripheral wall 32a of an urger 32 (which will be described below).

In the present embodiment, the mover 30 includes the urger 32 to urge each of the rotor portions 12 radially inward. In one example, the urger 32 includes the outer peripheral wall 32a and elastic members 32b. The outer peripheral wall 32a surrounds the radially outer portion of the rotor 10. The elastic members 32b are disposed between the outer peripheral wall 32a and the rotor portions 12 in the radial direction. The elastic members 32b are in abutment with the outer peripheral wall 32a and the rotor portions 12.

In one example, each elastic member 32b is a spring. As illustrated in FIGS. 5 and 6, the elastic members 32b are thus able to produce an urging force fb responsive to a length by which each elastic member 32b is compressed. In one example, the elastic members 32b are able to produce the urging force fb proportional to a length by which each elastic member 32b is compressed. The elastic members 32b radially inwardly apply the urging force fb to the rotor portions 12.

In the present embodiment, the urger 32 is structured such that the urging force fb of the urger 32 is greater than a centrifugal force fc when the rotor 10 is in the low rotation state (i.e., when ω ≤ ω0) and the urging force fb of the urger 32 is equal to or smaller than the centrifugal force fc when the rotor 10 is in the high rotation state (i.e., when ω > ω0).

Specifically, as illustrated in FIG. 5, the urger 32 is structured such that when the rotor 10 is in the non-rotating state (i.e., when ω = 0), the centrifugal force fc applied to each rotor portion 12 is zero and the urging force fb is equal to or greater than zero. The rotor portions 12 are thus located at positions where each radial gap CL1 between the rotor 10 and the stator 20 has the size D1 when reactive forces fr produced by, for example, restricting radially inward movement of the rotor portions 12 by the inner restrictors 31a are in balance with the urging force fb.

The urger 32 (each elastic member 32b) is structured such that when the rotational frequency ω corresponds to the predetermined rotational frequency ω0, the centrifugal force fc is in balance with (substantially equal to) the urging force fb, with the rotor portions 12 located at positions where each radial gap CL1 between the rotor 10 and the stator 20 has the size D1. Although description of forces applied to each rotor portion 12 other than those described above is omitted herein for the sake of simplification, forces applied to each rotor portion 12 other than those described above may be taken into consideration in setting the urging force fb. Examples of forces applied to each rotor portion 12 other than those described above include a frictional force between each rotor portion 12 and the guides 31 associated thereto.

As illustrated in FIG. 6, the urger 32 (each elastic member 32b) is structured such that the centrifugal force fc is greater than the urging force fb when the rotor 10 is in the high rotation state (i.e., when ω > ω0). When the rotor 10 is in the high rotation state, each rotor portion 12 moves radially outward. The size of each radial gap CL1 between the rotor 10 and the stator 20 will thus be greater than the size D1. Each rotor portion 12 moves radially outward to a radial position where the centrifugal force fc is in balance with the urging force fb (e.g., a position where each radial gap CL1 has the size D2 as illustrated in FIG. 6). In one example, when the rotational frequency ω is equal to or higher than the predetermined rotational frequency ω0, the size of each radial gap CL1 has a quadratic function relationship with the rotational frequency ω as illustrated in FIG. 7A.

As illustrated in FIGS. 2 and 3, each rotor portion 12 moves radially outward, so that the size of each circumferential gap CL2 between the rotor portions 12 is larger than the size D11. In other words, the rotating electric machine 100 is structured such that each circumferential gap CL2 between the rotor portions 12 also increases when the rotor 10 is in the high rotation state (i.e., when ω > ω0). As illustrated in FIGS. 2 and 3, for example, the size of each circumferential gap CL2 between the rotor portions 12 increases from the size D11 to a size D12. When the rotational frequency ω is equal to or higher than the predetermined rotational frequency ω0, the size of each circumferential gap CL2 has a quadratic function relationship with the rotational frequency ω as illustrated in FIG. 7B, for example.

The counter electromotive voltage generated in the stator 20 decreases when the size of each radial gap CL1 between the rotor 10 and the stator 20 increases to a size larger than the size D1 and the size of each circumferential gap CL2 between the rotor portions 12 increases to a size larger than the size D11. This prevents a reduction in the efficiency of the rotating electric machine 100.

Specifically, as illustrated in FIG. 3, the size of each radial gap CL1 increases from the size D1 to the size D2 and the size of the circumferential gap CL2 between the rotor portions 12 increases from the size D11 to the size D12 in a path for a magnetic flux B2 (indicated by the dotted line with arrows), defined by the permanent magnets 11 (field magnets) of the rotor 10 and the stator 20. This increases magnetic resistance in the path, resulting in a reduction in the counter electromotive voltage generated in the stator 20.

The rotating electric machine 100 is structured such that when the rotational frequency ω of the rotor 10 changes from the high rotation state to the low rotation state, for example, the size of each radial gap CL1 between the rotor 10 and the stator 20 decreases to the size D1 and the size of each circumferential gap CL2 between the rotor portions 12 decreases to the size D11. The rotating electric machine 100 is structured such that, when the rotor 10 stops, the rotation of the rotor 10 is stopped in the state in which each radial gap CL1 between the rotor 10 and the stator 20 has the size D1 and each circumferential gap CL2 between the rotor portions 12 has the size D11.

### Effects of Present Embodiment

In the above embodiment, the rotating electric machine (100) is structured such that the portions (12) provided by circumferentially dividing the rotor (10) each move radially outward so as to increase the size of each radial gap (CL1) between the rotor (10) and the stator (20). This makes it possible to increase the size of each radial gap (CL1) between the rotor (10) and the stator (20) by a distance by which the rotor (10) is moved radially outward. The rotating electric machine (100) is thus able to reduce the distance by which the rotor (10) is moved in order to provide gaps each having a desired size (e.g., the radial gaps CL1 each having the size D2). This makes it possible to increase each gap (CL1) between the stator (20) and the rotor (10) while preventing an increase in the size of the rotating electric machine (100). Axially moving a stator and a rotor relative to each other causes the relative positions of the stator and the rotor to deviate axially, resulting in a reduction in the area of a region where the stator and the rotor radially face each other. When a rotating electric machine that axially moves a stator and a rotor relative to each other is a motor, a reduction in the area of a region where the stator and the rotor radially face each other unfortunately results in a reduction in motor torque. To solve this problem, the present embodiment involves moving each of the portions (12) radially outward. Accordingly, the relative positions of the stator (20) and the rotor (10) will not deviate axially, and the area of a region where the stator (20) and the rotor (10) radially face each other will not decrease. Consequently, the present embodiment makes it possible to prevent a reduction in motor torque.

In the above embodiment, the rotating electric machine (100) is structured such that the portions (12) provided by circumferentially dividing the rotor (10) each move radially outward so as to increase the size of each radial gap (CL1) and increase the size of each circumferential gap (CL2) between the portions (12) provided by circumferentially dividing the rotor (10). Such a structure makes it possible to increase the size of each circumferential gap (CL2) between the portions (12), provided by circumferentially dividing the rotor (10), so as to reduce magnetic flux that circumferentially passes across the portions (12). Accordingly, if the magnetic flux is to be reduced by the amount necessary for the rotating electric machine (100), the distance by which the rotor (10) is moved will be shorter than when only the size of each radial gap (CL1) between the rotor (10) and the stator (20) is increased. This makes it possible to reduce the distance by which the rotor (10) is moved radially outward and prevent a radial increase in the size of the rotating electric machine (100) accordingly. Consequently, the present embodiment makes it possible to prevent not only an axial increase but also a radial increase in the size of the rotating electric machine (100).

In the above embodiment, the rotor (10) is circumferentially divided into the portions (12) each provided for every magnetic pole produced by the permanent magnets (11). Such a structure enables an increase in the size of each gap (CL1) between the rotor (10) and the stator (20) for each magnetic pole, resulting in a reduction in magnetic flux in a balanced manner.

In the above embodiment, the rotating electric machine (100) is structured such that when the rotational frequency (ω) of the rotor (10) has exceeded the predetermined rotational frequency (ω0), the portions (12) provided by circumferentially dividing the rotor (10) each move radially outward so as to increase the size of each radial gap (CL1) between the rotor (10) and the stator (20). When the rotational frequency of a rotor of a rotating electric machine has exceeded a predetermined rotational frequency, a counter electromotive voltage generated in a stator by permanent magnets (field magnets) usually increases and the efficiency of the rotating electric machine decreases accordingly. In view of this fact, the present embodiment provides the above structure. Thus, when the rotational frequency (ω) of the rotor (10) has exceeded the predetermined rotational frequency (ω0), i.e., when the rotor (10) is in the high rotation state, the rotating electric machine (100) is able to increase the size of each radial gap (CL1) between the rotor (10) and the stator (20) so as to reduce the magnetic flux produced by the permanent magnets 11 (field magnets), resulting in a reduction in counter electromotive voltage. Consequently, the rotating electric machine (100) is able to effectively prevent a reduction in the efficiency when the rotor (10) is in the high rotation state.

In the above embodiment, the rotating electric machine (100) is structured such that the portions (12) provided by circumferentially dividing the rotor (10) each move further radially outward as the rotational frequency of the rotor (10) increases. Such a structure makes it possible to reduce magnetic flux by an appropriate amount in accordance with the rotational frequency (ω) of the rotor (10). The rotating electric machine (100) is thus able to more suitably prevent a reduction in the efficiency when the rotor (10) is in the high rotation state (e.g., when ω > ω0).

In the present embodiment, the rotating electric machine (100) is structured such that the radially outwardly acting centrifugal force (fc) produced by the rotation of the rotor (10) causes each of the portions (12) provided by circumferentially dividing the rotor (10) to move radially outward. Such a structure makes it possible to use the centrifugal force (fc) as a driving source to move the rotor (10) radially outward, making it unnecessary to additionally provide a driver to press and move the rotor (10) radially outward. Consequently, the present embodiment makes it possible to prevent the structure to move the rotor (10) radially outward from being complicated.

In the above embodiment, the rotating electric machine (100) further includes the urger (32) that radially inwardly urges each of the portions (12) provided by circumferentially dividing the rotor (10). The urger (32) is structured such that the urging force (fb) of the urger (32) is greater than the centrifugal force (fc) when the rotational frequency (ω) of the rotor (10) is equal to or lower than the predetermined rotational frequency (ω0), and the urging force (fb) of the urger (32) is equal to or smaller than the centrifugal force (fc) when the rotational frequency (ω) of the rotor (10) is higher than the predetermined rotational frequency (ω0). Such a structure brings the urging force (fb) of the urger (32) into balance with the centrifugal force (fc) applied to the rotor (10) and thus enables the rotor (10) to be located at a suitable radial position. This makes it unnecessary to additionally provide a driver to move the rotor (10) not only radially outward but also radially inward. Consequently, the present embodiment makes it possible to prevent the structure related to radially moving the rotor (10) from being complicated.

In the above embodiment, the rotating electric machine (100) further includes the guides (31) that guide each of the portions (12), provided by circumferentially dividing the rotor (10), during radial sliding movement of the portions (12). Such a structure enables each of the portions (12) to be slid radially while being guided by the guides (31). This makes it possible to suitably move the portions (12) radially outward while preventing the circumferential positions of the portions (12) from being deviated.

### Variations

The embodiment disclosed herein is to be considered as not restrictive but illustrative in all respects. The scope of the present invention is defined not by the description of the foregoing embodiment but by the claims, and encompasses all modifications (variations) that fall within the meaning and scope equivalent to those of the claims.

The foregoing embodiment has been described on the assumption that the rotating electric machine is a motor by way of example. The present invention, however, is not limited to this example. Alternatively, the rotating electric machine may be a generator, for example.

The foregoing embodiment has been described on the assumption that the rotor is provided with eight magnetic poles by way of example. The present invention, however, is not limited to this example. Alternatively, the rotor may be provided with any other number of magnetic poles as long as the number of magnetic poles is four or more.

The foregoing embodiment has been described on the assumption that the rotating electric machine is structured to enable all the rotor portions to move radially outward by way of example. The present invention, however, is not limited to this example. Alternatively, the rotating electric machine may be structured to enable at least one or more of the rotor portions to move radially outward. When the rotating electric machine is structured to enable at least one or more of the rotor portions to move, the rotor portions are preferably disposed in point symmetry with respect to an axial center as viewed axially even after the rotor portions have moved.

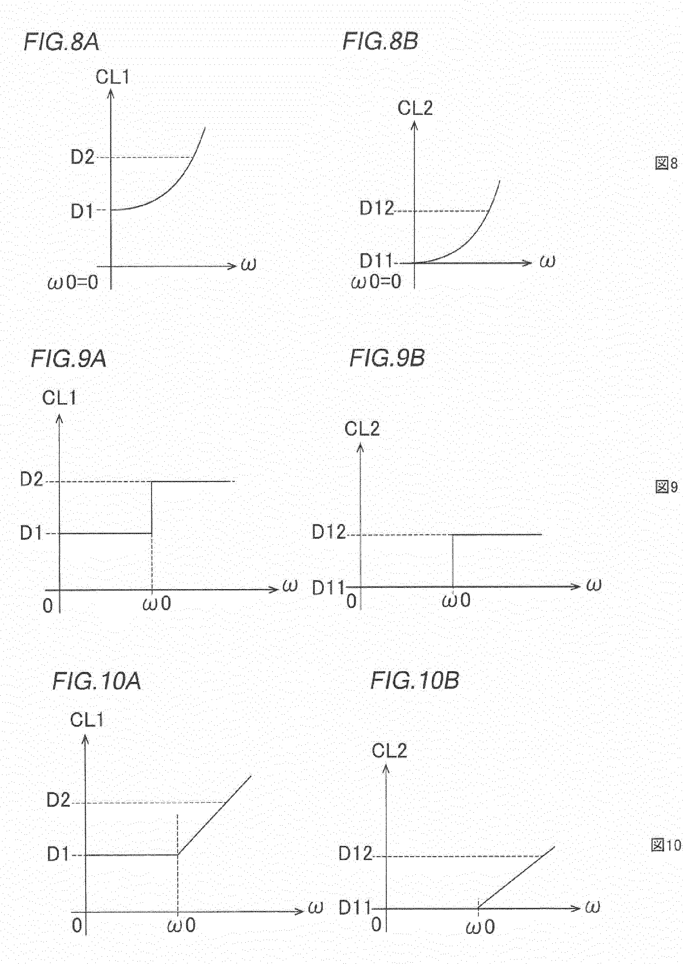

The foregoing embodiment has been described on the assumption that the rotating electric machine is structured such that the predetermined rotational frequency ω0 is a value greater than zero as illustrated in FIG. 7 by way of example. The present invention, however, is not limited to this example. That is, a rotating electric machine according to a first variation may be structured such that the predetermined rotational frequency ω0 is set at zero as illustrated in FIGS. 8A and 8B.

The foregoing embodiment has been described on the assumption that the rotating electric machine is structured to increase each radial gap CL1 and each circumferential gap CL2 continuously in accordance with an increase in the rotational frequency ω as illustrated in FIG. 7 by way of example. The present invention, however, is not limited to this example. For example, a rotating electric machine according to a second variation may be structured to increase the size of each radial gap CL1 (FIG. 9A) and the size of each circumferential gap CL2 (FIG. 9B) in a step-by-step (stepwise) manner as illustrated in FIG. 9. Each radial gap CL1 and each circumferential gap CL2 increase in two steps in FIG. 9 but may increase in three or more steps.

The foregoing embodiment has been described on the assumption that the rotating electric machine is structured to cause each radial gap CL1 and each circumferential gap CL2 to have a quadratic function relationship with the rotational frequency ω as illustrated in FIG. 7 by way of example. The present invention, however, is not limited to this example. For example, a rotating electric machine according to a third variation may be structured such that each radial gap CL1 (FIG. 10A) and each circumferential gap CL2 (FIG. 10B) have a linear function relationship with the rotational frequency ω as illustrated in FIG. 10.

The foregoing embodiment has been described on the assumption that the rotating electric machine is structured to radially move the rotor portions using the centrifugal force fc applied to the rotor and the urging force fb produced by the urger by way of example. The present invention, however, is not limited to this example. Alternatively, the rotating electric machine may be structured to force the rotor portions to move radially by a power-driven driver without using the centrifugal force fc applied to the rotor or the urging force fb produced by the urger.

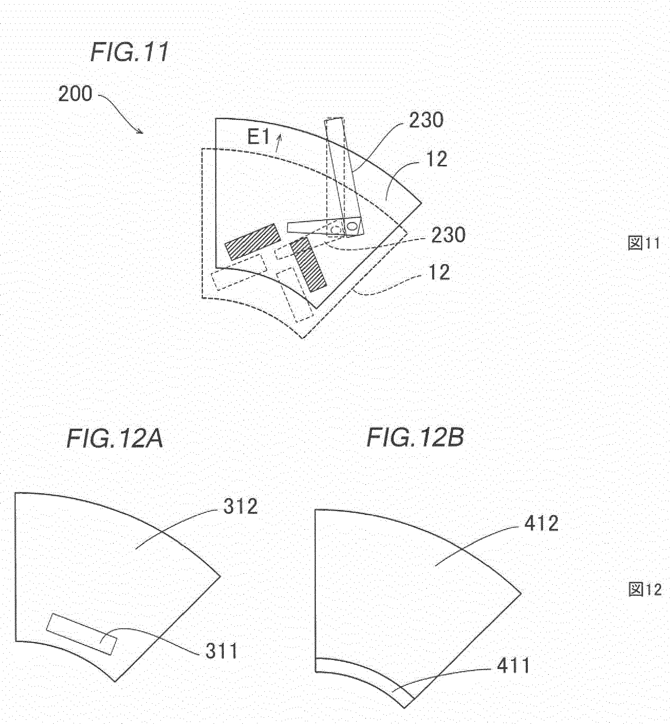

The foregoing embodiment has been described on the assumption that the rotating electric machine is structured to include the elastic members and the guides so as to enable the rotor portions to move radially outward by way of example. The present invention, however, is not limited to this example. For example, a rotating electric machine 200 according to a fourth variation may be provided with linkages 230 connected to the rotor portions 12 as illustrated in FIG. 11. In this case, the linkages 230 are structured to move the rotor portions 12 radially outward (i.e., in the direction indicated by the arrow E1) when the rotational frequency ω of the rotor 10 has exceeded the predetermined rotational frequency ω0.

The foregoing embodiment has been described on the assumption that the rotor is divided into the rotor portions each provided for every magnetic pole by way of example. The present invention, however, is not limited to this example. Alternatively, the rotor may be divided into the rotor portions each provided for every two or more magnetic poles as long as the balance of magnetic flux in the rotating electric machine is not affected.

The foregoing embodiment has been described on the assumption that two permanent magnets are disposed in the magnet holes of each rotor portion by way of example. The present invention, however, is not limited to this example. Alternatively, one permanent magnet or three or more permanent magnets may be provided in each rotor portion, or permanent magnets may be disposed in regions of the rotor portions other than the magnet holes. For example, in a fifth variation, each permanent magnet 311 may be disposed in an associated one of rotor portions 312 as illustrated in FIG. 12A. In a sixth variation, each permanent magnet 411 may be disposed on a surface of an associated one of rotor portions 412 as illustrated FIG. 12B.

The foregoing embodiment has been described on the assumption that the rotor is a permanent magnet type rotor provided with permanent magnets and the rotating electric machine is a permanent magnet motor by way of example. The present invention, however, is not limited to this example. Alternatively, the rotor may be provided with no permanent magnets. In an alternative example, the rotating electric machine may be an induction motor whose rotor is provided with no permanent magnets and includes a "squirrel-cage" conductor.

### Description of the Reference Numerals

10 rotor
11, 311, 411 permanent magnet
12, 312, 412 rotor portion (portions provided by circumferentially dividing a rotor)
20 stator
22 winding
31 guide
32 urger
100, 200 rotating electric machine
CL1 radial gap
CL2 circumferential gap

## Claims

1. A rotating electric machine comprising:
a stator including a winding; and
an annular rotor disposed radially outward of the stator, with a radial gap between the rotor and the stator, wherein
the rotor includes a plurality of portions provided by circumferentially dividing the rotor,
the portions provided by circumferentially dividing the rotor are each movable radially outward, and
the rotating electric machine is structured such that the portions provided by circumferentially dividing the rotor each move radially outward so as to increase the radial gap between the rotor and the stator.

2. The rotating electric machine according to claim 1, wherein
the rotating electric machine is structured such that the portions provided by circumferentially dividing the rotor each move radially outward so as to increase the radial gap and increase a circumferential gap between the portions provided by circumferentially dividing the rotor.

3. The rotating electric machine according to claim 1 or 2, wherein
the rotating electric machine is structured such that when a rotational frequency of the rotor has exceeded a predetermined rotational frequency, the portions provided by circumferentially dividing the rotor each move radially outward so as to increase the radial gap.

4. The rotating electric machine according to claim 3, wherein
the rotating electric machine is structured such that the portions provided by circumferentially dividing the rotor each move further radially outward as the rotational frequency of the rotor increases.

5. The rotating electric machine according to claim 3 or 4, wherein
the rotating electric machine is structured such that a radially outwardly acting centrifugal force produced by rotation of the rotor causes each of the portions provided by circumferentially dividing the rotor to move radially outward.

6. The rotating electric machine according to claim 5, further comprising an urger that radially inwardly urges each of the portions provided by circumferentially dividing the rotor, wherein
the urger is structured such that an urging force of the urger is greater than the centrifugal force when the rotational frequency of the rotor is equal to or lower than the predetermined rotational frequency, and the urging force of the urger is equal to or smaller than the centrifugal force when the rotational frequency of the rotor is higher than the predetermined rotational frequency.

7. The rotating electric machine according to any one of claims 1 to 6, further comprising a guide that guides each of the portions, provided by circumferentially dividing the rotor, during radial sliding movement of the portions.

8. The rotating electric machine according to any one of claims 1 to 7, wherein
the rotor is provided with a plurality of permanent magnets, and
the portions are respectively divided by each magnetic pole produced by the permanent magnets.

9. A rotating electric machine comprising:
a stator including a winding; and
an annular rotor including a plurality of permanent magnets, the rotor being disposed radially outward of the stator, with a radial gap between the rotor and the stator, wherein
the rotor includes a plurality of portions provided by circumferentially dividing the rotor,
the portions provided by circumferentially dividing the rotor are each movable radially outward, and
the rotating electric machine is structured such that the portions provided by circumferentially dividing the rotor each move radially outward so as to increase the radial gap between the rotor and the stator.
